# EUROPÄISCHE PATENTSCHRIFT

(11) **EP 3 695 056 B1**
(45) Veröffentlichungstag und Bekanntmachung des Hinweises auf die Patenterteilung: **12.07.2023**
(21) Anmeldenummer: 18795310.4
(22) Anmeldetag: 12.10.2018
(51) Int. Cl.: E02B 17/04, E02D 27/42, F03D 13/25

(54) **DICHTUNG**
GASKET
JOINT D'ÉTANCHÉITÉ

(30) Priorität: 13.10.2017 DE 102017123935
(43) Veröffentlichungstag der Anmeldung: 19.08.2020
(73) Patentinhaber: Rosen Swiss AG, 6370 Stans (CH)
(72) Erfinder: LARINK, Dirk, 48455 Bad Bentheim (DE); KRÜMPEL, Hanna, 48485 Neuenkirchen (DE); LINDNER, Alexander, 48607 Ochtrup (DE)
(74) Vertreter: Wischmeyer, André
(86) Internationale Anmeldenummer: PCT/EP2018/077946
(87) Internationale Veröffentlichungsnummer: WO 2019/073060

(56) Entgegenhaltungen:
- EP-A1- 2 594 696
- EP-A1- 2 672 016
- EP-A1- 2 698 476
- EP-A1- 2 772 587
- WO-A1-2005/005752
- WO-A1-2011/147472
- WO-A1-2017/178657
- WO-A1-2018/070868
- GB-A- 2 433 540

## Beschreibung

Die vorliegende Erfindung betrifft eine Dichtungsanordnung für eine Verbindung zweier insbesondere als Monopile und Übergangsstück ausgebildeter Verbindungselemente eines Offshore- Bauwerks, vorzugsweise einer Offshore-Windenergieanlage, insbesondere eines Unterbaus derselben. Darüber hinaus betrifft die Erfindung ein Verfahren zur Herstellung derselben.

Bei der Errichtung von Offshore-Windenergieanlagen finden eine Vielzahl von Fundamenttypen Verwendung, welche die eigentliche Windenergieanlage am Offshore-Standort tragen. Typische Fundamenttypen sind Jackets, Tripods, Tetrapods, Monopiles, Schwergewichtsgründungen, Tripiles, Bucket-Fundamente oder auch schwimmende Fundamente, deren Einsatzmöglichkeiten von Faktoren wie dem Gewicht der Windenergieanlage, der Wassertiefe sowie den Verhältnissen und der Beschaffenheit des Meeresbodens abhängig sind.

Bei einem Monopile-Unterbau wird ein in den Meeresboden eingetriebenes Fundamentrohr (Monopile) mit einem Übergangsstück verbunden. Auf dem Übergangsstück kann anschließend die Windenergieanlage errichtet werden. Standardmäßig wird zur Verbindungsherstellung das Übergangsstück über das Monopile gestülpt und ein zwischen beiden Verbindungselementen vorhandener Ringspalt mit einem Vergussmörtel verfüllt bzw. vergroutet. Alternativ oder zusätzlich können die beiden Verbindungselemente, insbesondere unter Verwendung entsprechender Flansche, vernietet oder verschraubt werden.

Während des Betriebs ist die Anlage mitunter starken Belastungen, beispielsweise durch Wind und Wellen, ausgesetzt. Dies führt dazu, dass das Monopile und das die Windenergieanlage tragende Übergangsstück sich relativ zueinander bewegen. Herkömmlicher Vergussmörtel neigt bei derartigen Belastungen mit der Zeit zu Brüchen, was die Verbindung zwischen Monopile und Übergansstück schwächt und zu einer dauerhaften Verlagerung des die Windenergieanlage tragenden Übergangsstücks aus der optimalen Position, insbesondere zu einer Absenkung oder Schiefstellung der Anlage, führt. Dabei können durch ein Verkippen des Übergangsstücks relativ zum Monopile zwischen beiden Verbindungselementen Lücken entstehen, so dass die Kapselung dieser Baugruppe nicht mehr gewährleistet ist. Folglich kann Meerwasser in die Baugruppe eindringen und Schaden anrichten.

Aus der EP 2 672 016 A1 ist eine Dichtlippe für eine standardmäßige Grout-Verbindung eines in den Meeresboden eingetriebenen Pfahls und einer Muffe gezeigt, wodurch Wassereintritt in die Baugruppe und damit einhergehender Abtrag von Mörtel verhindert werden soll. Jedoch kann damit Brüchen, die aufgrund der im Betrieb auftretenden Belastungen entstehen, nicht entgegengewirkt werden, so dass eine Absenkung oder Schiefstellung der Windenergieanlage nicht verhindert wird. Eine andere Dichtung ist aus der EP 2 594 696 A1 bekannt.

Der Erfindung liegt daher die Aufgabe zugrunde, eine Verbindung zweier insbesondere als Monopile und Übergangsstück ausgebildeter Verbindungselemente eines Offshore- Bauwerks, vorzugsweise einer Offshore-Windenergieanlage, insbesondere eines Unterbaus derselben, zu verbessern. Ferner ist die Aufgabe der Erfindung, ein kostengünstiges und prozesssicheres Verfahren zur Herstellung der zur Verbesserung der Verbindung notwendigen Bauteile bereitzustellen.

Diese Aufgabe wird gelöst durch eine Dichtungsanordnung mit den Merkmalen des Anspruchs 1 sowie einem Verfahren zur Herstellung einer Dichtungsanordnung mit den Merkmalen des Anspruchs 14. Vorteilhafte Weiterbildungen der Erfindung sind den hierauf rückbezogenen Unteransprüchen sowie der nachfolgenden Beschreibung zu entnehmen.

Erfindungsgemäß wird an zumindest einem der Verbindungselemente zumindest eine Dichtungseinheit derart festgelegt, dass die Dichtungseinheit in einer Verbindungsposition, zwischen einer inneren Verbindungsfläche des einen Verbindungselements und einer äußeren Verbindungsfläche des anderen Verbindungselements angeordnet ist. In der Verbindungsposition sind ein oberes, insbesondere als Übergangsstück ausgebildetes, Verbindungselement und ein unteres, insbesondere als Monopile ausgebildetes, Verbindungselement zur stabilen Verbindungsherstellung die zumindest eine Dichtungseinheit klemmend ineinandergesteckt.

Dabei weisen die üblicherweise zumindest teilweise zylindrisch ausgebildeten Verbindungselemente jeweils zumindest einen konisch verlaufenden Abschnitt, insbesondere in Form eines hohlen Kegelstumpfs, auf, in dem sich zumindest teilweise die jeweilige Verbindungsfläche befindet. Die Geometrie des hohlen Kegelstumpfs ist dabei durch den Öffnungswinkel des Kegels definiert, der vorzugsweise 2° bis 6°, bevorzugt 3° bis 5°, besonders bevorzugt 4°, beträgt.

In der Verbindungsposition sind die Verbindungselemente vorzugsweise koaxial zueinander angeordnet, wobei sie sich zumindest in den jeweiligen konisch verlaufenden Abschnitten überlappen. Die Konizität ermöglicht es, (Gewichts-)Kräfte in axialer Richtung zu übertragen. Dabei umgibt das eine "äußere" Verbindungselement das andere "innere" Verbindungselement, wobei eine innere Verbindungsfläche des äu-ßeren Verbindungselements und eine äußere Verbindungsfläche des inneren Verbindungselements einander zugewandt sind.

Die zumindest eine Dichtungseinheit ist an zumindest einem der Verbindungselemente, beispielsweise durch Kleben oder Haften, festgelegt. Bei der Verwendung mehrerer Dichtungseinheiten kann eine Dichtungseinheit an dem einen Verbindungselement festgelegt sein, während eine andere Dichtungseinheit an dem anderen Verbindungselement festgelegt ist.

Insbesondere bei der Verwendung einer mehrteiligen Dichtungseinheit, deren Teile vorzugsweise nicht mehr als 50 kg schwer sind, können diese einzelnen Teile separat gegossen, zum Verbindungselement transportiert und dort einzeln aufgeklebt und zur Dichtungseinheit zusammengesetzt werden. Die einzelnen Teile der Dichtungseinheit können über Nut-Feder- oder andere Verbindungssysteme sicher aneinander und/oder ggf. in Ergänzung oder alternativ zu einer Klebeverbindung an einem der Verbindungselemente befestigt werden. Diese Nut-Feder- oder anderen Verbindungssysteme können je nach Anforderung an die aufzunehmenden Kräfte mit ihren Verbindungskräfte aufnehmenden Teilen vorzugsweise aus Polyurethan oder auch aus mehreren Materialien unter Einschluss von insbesondere eingegossenen Stahlteilen ausgebildet sein. Zur Ausbildung eines Verbindungssystems können die einzelnen Teile der Dichtungseinheit auch magnetisch aneinander festlegbar ausgebildet sein. Hierzu sind in die Dichtungseinheitenteilen vorzugsweise Permanentmagnete eingegossen. Diese können in angrenzenden Dichtungseinheitenteilen vorhandene Gegenteile, die magnetisch oder magnetisierbar sind, anziehen. Weiterhin können ein oder mehrere in den Teilen angeordnete Magnete auch eine gerade bei Klebeverbindungen vorteilhafte Erstpositionierung an dem typischerweise aus Stahl ausgebildeten Verbindungselement ermöglichen.

Die zumindest eine Dichtungseinheit ist zwischen den Verbindungselementen angeordnet und wird dort insbesondere aufgrund der Gewichtskraft des oberen Verbindungselements geklemmt, wobei sie Kräfte, beispielsweise die Gewichtskraft des oberen Verbindungelements auf das untere Verbindungselement, überträgt. Ferner ist die zumindest eine Dichtungseinheit lasttragend ausgebildet, so dass sie die Verbindungselemente voneinander beabstandet und das obere Verbindungselement trägt. Zwischen der Dichtungseinheit und der Verbindungsfläche des Verbindungselements, an dem die Dichtungseinheit nicht festgelegt ist, liegt ein Kraftschluss vor, wodurch eine stabile Verbindung zwischen den Verbindungselementen hergestellt wird.

Die Verbindung zweier Verbindungselemente wird somit unter Verzicht auf die Verwendung von Vergussmörtel und/oder Nieten bzw. Schrauben verbessert. Eine derartige Dichtungsanordnung nimmt die Belastungen auf, die durch eine Relativbewegung zwischen den beiden Verbindungselementen auftreten, ohne Ermüdungsbrüchen zu unterliegen, wirkt vielmehr dämpfend und ermöglicht somit eine stabile und dauerhaft beständige Verbindung, die einfach in der Herstellung und Montage ist.

Durch die Verbindung der Verbindungselemente auf Basis der Dichtungsanordnung werden Schweißnähte, Versätze zwischen aneinander geschweißten Teilen der Verbindungselemente oder Abweichungen der Verbindungselemente von der gewünschten Form, beispielsweise Ovalitäten, ausgleichbar. Weiterhin ist durch die schnelle und einfache Montage ein Verzicht auf manuelle Tätigkeiten im Bereich der Verbindung möglich. Die Verbindung durch Ineinanderstecken der Verbindungselemente kann somit zur Montage des Bauwerks ohne den regelmäßig aufwendigen Einsatz von Tauchpersonal auch unter Wasser erfolgen.

Zumindest eine Dichtungseinheit weist wenigstens ein sich in Umfangsrichtung vollumfänglich erstreckendes, elastisches Abdichtungselement auf. Das Abdichtungselement ist dabei über den vollen Umfang des zwischen den Verbindungselementen vorhandenen Ringspalts verlaufend ausgebildet. Die Dicke des Abdichtungselements ist gegenüber der Dicke eines angrenzenden Dichtungseinheitsbereichs vergrößert, so dass das Abdichtungselement gegenüber der weiteren Dichtungseinheit hervorsteht. Dabei ist die Dicke als äußere Abmessungen senkrecht zur angrenzenden Verbindungsfläche definiert. Mit anderen Worten steht das Abdichtungselement gegenüber der weiteren Dichtungseinheit hervor.

Ferner ist das Abdichtungselement elastisch ausgebildet, so dass es im Falle einer Relativbewegung der Verbindungselemente zueinander eine ausreichende Drucckraft auf eine gegenüberliegende Verbindungsfläche ausübt und die Baugruppe gekapselt bleibt. Schädliches Meerwasser oder Feuchtigkeit kann somit nicht eintreten, wodurch eine derartige Verbindung noch beständiger ist.

Das Abdichtungselement ist vorzugsweise in der näheren Umgebung einer Stirnseite des äußeren Verbindungselements angeordnet. Beispielsweise ist das Abdichtungselement für eine Dichtungsanordnung für einen Monopile-Unterbau am untersten Ende der Dichtungsanordnung angeordnet, so dass nahezu die gesamte Dichtungsanordnung gekapselt ist.

Das Abdichtungselement ist insbesondere in Form einer sich vollumfänglich erstreckenden Dichtlippe ausgebildet. Jedoch sind auch andere Dichtungsvarianten denkbar. Beispielsweise kann das Abdichtungselement auch in Form einer Labyrinthdichtung ausgebildet sein, deren einzelne Formelemente selbst nicht vollumfänglich verlaufen, bei der eine vollumfängliche Abdichtung der Verbindung trotzdem gewährleistet ist.

Vorzugsweise weist die zumindest eine Dichtungseinheit eine Dicke von 5 mm bis 75 mm, bevorzugt 20 mm bis 50 mm, besonders bevorzugt 25 mm bis 30 mm, auf.

Bei diesen Dicken kann die Dichtungseinheit besonders gut Lasten aufnehmen und deckt die zukünftig erwartbaren Größen der Verbindungselemente mit Durchmessern bis 8 m ab. Das Abdichtungselement weist hierbei in der Regel eine um 50 % bis 100 % größere Dicke gegenüber der Dicke des angrenzenden Dichtungseinheitsbereichs auf.

In einer bevorzugten Ausgestaltung der Erfindung ist die zumindest eine Dichtungseinheit mehrschichtig ausgebildet. Insbesondere können Schichten mit unterschiedlichen Eigenschaften bzw. aus unterschiedlichen Materialien vorgesehen sein. Somit können beispielsweise je nach Einsatzort geeignete Schichtgeometrien mit optimalen Eigenschaften erreicht werden, welche die Lastaufnahme verbessern.

Besonders bevorzugt weist das eine oder die mehreren Abdichtungselemente eine höhere Elastizität auf als die übrige Dichtungseinheit. Insbesondere kann das Abdichtungselement als eine ein elastisches Material umfassende Schicht an eine weniger oder kaum elastische Schicht angeordnet sein und somit die Abdichtungseigenschaft bei verringerter Dicke der Dichtungseinheit in diesem Bereich bereitgestellt werden, was Material einspart und die Herstellungskosten verringert.

In einer weiteren Ausgestaltung der Erfindung ist die zumindest eine Dichtungseinheit hydrolysestabil ausgebildet. Dies garantiert eine dauerhafte Beständigkeit der Dichtungsanordnung im Betrieb am Offshore-Standort.

Vorzugsweise umfasst die zumindest eine Dichtungseinheit hierbei einen oder mehrere Kunststoffe, da diese korrosionsbeständig und günstig in der Herstellung sind. In diesem Zusammenhang können Elastomere, Thermoplaste, insbesondere unter Beimengung von Weichmachern, und/oder Duroplaste verwendet werden. Besonders bevorzugt umfasst die zumindest eine Dichtungseinheit ein oder mehrere Materialien aus der Gruppe Polypropylen, Polyethylen, Polyoxymethylen, Gummi, Nylon, Polyvinylchlorid, Polyurea, Polyurethan, wobei auch Schäume aus den vorstehenden Materialien umfasst sind.

Besonders bevorzugt umfasst die zumindest eine Dichtungseinheit hydrolysestabiles Polyurethan, insbesondere ein Polyurethan auf Basis eines Polyether-Polyols und eines Methylendiphenylisocyanats (MDI). Polyurethan ist salzwasserbeständig, leicht herzustellen sowie äußerst abriebfest und daher für den Betrieb am Offshore-Standort besonders geeignet.

In einer besonders bevorzugten Ausgestaltung der Erfindung ist eine erste Schicht aus einem Polyurethan, insbesondere Polyurethan-Schaum, hergestellt und diese erste, ggf. über eine Grundierung mit dem Verbindungselement verbundene, Schicht mit einer weiteren aus einem ungeschäumten Polyurethan hergestellten Schicht zumindest teilweise bedeckt. Die Abdichtungseinheit kann dann ebenfalls aus einem Polyurethan-Schaum hergestellt sein und auf oder angrenzend an zumindest einer der beiden Schichten ausgebildet werden.

In einer weiteren Ausgestaltung der Erfindung umfasst die zumindest eine Dichtungseinheit bis zu 50% einen oder mehrere Füllstoffe, vorzugsweise in Form von CaCOs (bis vorzugsweise 33%), Wollastonit (als Mehl, z.B.TREMIN 283-800 AST mit einem D₉₈ von 12 µm bis vorzugsweise 25 %), Graphit und/oder Ruß (jeweils bis vorzugsweise 15 %). Durch Beimengung dieser besonders preisgünstigen Füllstoffe ist die Dichtungsanordnung kostengünstiger in der Herstellung.

Entsprechend einer besonders bevorzugten Ausgestaltung der Erfindung ist vorgesehen, dass die zumindest eine Dichtungseinheit mittels eines Haftvermittlers an der Verbindungsfläche zumindest eines der Verbindungselemente haftet. Dies führt zu einem besonders starken Stoffschluss zwischen der Dichtungseinheit und dem Verbindungselement mit hoher Haftfestigkeit, wodurch die Beständigkeit der Dichtungsanordnung erhöht wird.

Mit Vorteil weist die zumindest eine Dichtungseinheit ausgenommen das Abdichtungselement eine Shore-Härte A zwischen 70 und 100 oder eine Shore-Härte D von 20 bis 80 auf. Eine diese Härtegrade aufweisende Dichtungseinheit kann das obere Verbindungselement dauerhaft tragen.

Besonders bevorzugt weist das zumindest eine Abdichtungselement eine Shore-Härte A zwischen 40 und 100, bevorzugt zwischen 40 und 90, besonders bevorzugt zwischen 40 und kleiner 70, auf. Bei diesen Härtegraden ist das Abdichtungselement ausreichend elastisch ausgebildet, so dass eine gute Abdichtung bzw. Kapselung der Baugruppe erreicht wird.

Entsprechend einer weiteren bevorzugten Ausgestaltung der Erfindung ist vorgesehen, dass die zumindest eine Dichtungseinheit einer Druckbelastung von 0,1 N/mm² bis 50 N/mm² standhaltend ausgebildet ist. Eine derartige Auslegung bewirkt, dass die Dichtungseinheit unter Belastungen während des Betriebs einer Offshore-Windenergieanlage dauerhaft einsetzbar bleibt.

Die zumindest eine Dichtungseinheit kann die Form eines Ringes, eines Hohlzylinders, eines hohlen Kegelstumpfs oder Kombinationen davon ausbilden. Ferner kann die zumindest eine Dichtungseinheit ein Segment eines Ringes, eines Hohlzylinders oder eines hohlen Kegelstumpfs ausbilden.

Ring, Hohlzylinder und hohler Kegelstumpf sind Formkörper, bei denen eine ausgezeichnete Zentralachse durch ihre Rotationssymmetrie definiert ist, wobei die Zentralachse von dem jeweiligen Formkörper umschlossen wird. Die Höhe der Dichtungseinheit ist durch die äußeren Abmessungen parallel zu seiner Zentralachse definiert. Der Innendurchmesser der Dichtungseinheit wird durch die inneren Abmessungen der Dichtungseinheit in einer senkrecht zur Zentralachse verlaufenden Schnittebene definiert. Der Außendurchmesser der Dichtungseinheit wird durch die äußeren Abmessungen der Dichtungseinheit in einer senkrecht zur Zentralachse verlaufenden Schnittebene definiert. Zentralachse, Innen- und Außendurchmesser einer als Segment eines Formkörpers ausgebildeten Dichtungseinheit sind durch den Formkörper, dessen Segment sie ausbilden, definiert.

Insbesondere weist die zumindest eine Dichtungseinheit eine Höhe von zumindest 1 m und einen Durchmesser von zumindest 2,5 m auf. Dadurch ist die Dichtungseinheit ausreichend belastbar und insbesondere gut handhabbar. Besonders bevorzugt beträgt eine Gesamthöhe einer aus mehreren, insbesondere parallel zu ihrer Höhe voneinander beabstandeten, Dichtungseinheiten gebildeten Gruppe von Dichtungseinheiten bis zu 30 m. Eine derartige Gruppe von Dichtungseinheiten dieser Gesamthöhe kann insbesondere durch mehrere, vorzugsweise ringförmige Dichtungseinheiten ausgebildet werden, die vorzugsweise voneinander beabstandet sind und/oder mit Ausnehmungen versehen sind. Dadurch können nachträglich in den dichtungsfreien Bereichen Schweißarbeiten am Verbindungselement, beispielsweise zur Anbringung von Leitern o.Ä., durchgeführt werden.

Vorzugsweise ist die Dichtungseinheit derart ausgebildet, dass sie zumindest teilweise, insbesondere vollständig, an der Verbindungsfläche des Verbindungselements, an dem sie festgelegt ist, formschlüssig anliegt. Insbesondere ist die Dichtungseinheit ferner derart ausgebildet, dass sie in einer Verbindungsposition zumindest teilweise, vorzugsweise vollständig, formschlüssig an der Verbindungsfläche des Verbindungselements, an dem sie nicht festgelegt ist, anliegt. Die Formschlüssigkeit dient dazu, die Belastungen möglichst großflächig zu verteilen und insbesondere Punktbelastungen zu vermeiden, wodurch eine stabile Verbindung erreicht wird und die Dichtungseinheit beständiger ist. Besonders bevorzugt ist die zumindest eine Dichtungseinheit an die Geometrie zumindest eines Verbindungselements angepasst, derart, dass sie zumindest teilweise, vorzugsweise vollständig, in der Form eines hohlen Kegelstumpfs ausgebildet ist, dessen Kegel-Öffnungswinkel vorzugsweise 2° bis 6°, bevorzugt 3° bis 5°, besonders bevorzugt 4°, beträgt.

In einer bevorzugten Ausgestaltung der Erfindung ist die zumindest eine Dichtungseinheit aus mehreren aneinander angeordneten Dichtungssegmenten zusammengesetzt. Die Dichtungssegmente können dabei auf beliebige Weisen getrennt sein, wobei eine "Trennungslinie" insbesondere in Umfangsrichtung und/oder entlang der Höhe der Dichtungseinheit verläuft. Vorzugsweise sind die Dichtungssegmente dabei zumindest im Bereich des wenigstens einen Abdichtungselements zur form- und/oder kraftschlüssigen, dichten Verbindung ausgebildet.

In einer besonders bevorzugten Ausgestaltung der Erfindung umfasst die Dichtungsanordnung zumindest zwei voneinander beabstandete Dichtungseinheiten. Die Dichtungseinheiten können in einer Richtung parallel zur Längsmittelachse des Verbindungselements, an dem sie festgelegt sind, beabstandet sein. Somit kann einerseits eine für die Stabilität der Verbindung notwendige räumliche Ausdehnung der Dichtungseinheit auf der Verbindungsfläche bereitgestellt und darüber hinaus Material eingespart werden, wodurch die Dichtungsanordnung kostengünstiger hergestellt und mit weniger Aufwand montiert werden kann.

Ferner können die Dichtungseinheiten in Umfangsrichtung bezüglich der Längsmittelachse des Verbindungselements, an dem sie festgelegt sind, voneinander beabstandet sein. In Bereichen abseits des Abdichtungselements, in denen keine Kapselung der Baugruppe mehr notwendig ist, kann somit Material eingespart werden, wodurch die Dichtungsanordnung kostengünstiger hergestellt und montiert werden kann.

In einer weiteren bevorzugten Ausgestaltung der Erfindung weist die zumindest eine Dichtungseinheit in zumindest einem Höhenabschnitt in Umfangsrichtung zumindest eine Ausnehmung auf. Somit kann auch bei einer zusammenhängenden Dichtungseinheit, welche die Verbindung besonders gut stabilisiert, Material eingespart werden. Ferner können nachträglich in dichtungsfreien Bereichen Schweißarbeiten am Verbindungselement, beispielsweise zur Anbringung von Leitern o.Ä., durchgeführt werden. Insbesondere ist eine als Hohlzylinder und/oder hoher Kegelstumpf ausgebildete Dichtungseinheit in einem oberen und einem unteren Höhenbereich umlaufend geschlossen und weist zwischen dem oberen und unteren Höhenbereich in Umfangsrichtung zumindest eine Ausnehmung auf. Besonders bevorzugt weist eine als Hohlzylinder und/oder hohler Kegelstumpf ausgebildete Dichtungseinheit, die in einem unteren, sich insbesondere in der Nähe des Abdichtungselements befindenden, Bereichs umlaufend verlaufend ausgebildet ist in dem übrigen Bereich in Umfangsrichtung zumindest eine Ausnehmung auf.

Mit Vorteil umfasst die Dichtungsanordnung eine Sensoranordnung zum Aufnehmen der in der Dichtungsanordnung auftretenden mechanischen Kräfte. Dadurch können die im Betrieb vorherrschenden Belastungen aufgezeichnet und die Funktionalität der Dichtungsanordnung überwacht werden, so dass bei einem Ausfall zeitnah Gegenmaßnahmen eingeleitet werden können, bevor größere Schäden entstehen. Zudem ermöglicht der Sensor eine Zustandsüberwachung weiterer Teile der Windenergieanlage, beispielsweise durch Aufnahme von charakteristischen Vibrationen / Dehnungen, wodurch Maßnahmen zur Schadensabwehr veranlasst werden können.

In einer weiteren erfindungsgemäßen Ausführung ist eine gegebenenfalls weitere Sensoranordnung vorgesehen, die in wenigstens einem Teil der vorzugsweise mehrteiligen Dichtungseinheit angeordnet ist und eine Positionierung zumindest eines der Verbindungselemente überwacht. Hierbei handelt es sich vorzugsweise um eine Sensoranordnung, die bei Erreichen eines spezifischen, für eine Anordnung der Verbindungselemente ineinander charakteristischen Druckes ein entsprechendes Signal insbesondere an eine Überwachungseinheit ausgibt. Gleichfalls kann eine solche Sensoranordnung dazu dienen, langfristig den korrekten Sitz der Verbindungselemente ineinander zu überwachen. Bei z.B. Verkippen der Verbindungselemente zueinander kann die Sensoranordnung ein entsprechendes Signal ausgeben, welches über zugehörige Kommunikationsmittel an eine/die Überwachungseinheit übermittelt werden oder bei Bedarf/Anfrage ausgegeben werden kann.

Mit Vorteil ist die zumindest eine Dichtungseinheit selbsttragend ausgebildet, wodurch die Handhabbarkeit verbessert wird und kein Schaden durch ungünstige Lagerung entstehen kann.

Besonders bevorzugt bildet zumindest eine Dichtungseinheit in einem Endbereich eine sich in radialer Richtung und somit quer zur Zentralachse der Dichtungseinheit erstreckende Deckfläche aus, die insbesondere zur Übertragung von Gewichtskräften ausgebildet ist, so dass die Verbindung stabilisiert wird.

Ein besonderer Vorteil der erfindungsgemäßen Dichtungsanordnung ist, dass der Arbeitsaufwand zur Verbindungsherstellung am Offshore-Standort minimiert wird, da beispielsweise bei einem Monopile-Unterbau die Dichtungseinheit bereits an Land am Übergangsstück festgelegt werden kann. Am Offshore-Standort, an dem ungünstigere Arbeitsbedingungen vorherrschen als an Land, ist daher nur noch das Zusammenstecken des Übergangsstücks und des Monopiles zu besorgen.

Die erfindungsgemäße Dichtungsanordnung wurde vorstehend beispielhaft anhand der Verbindung eines Monopiles und eines Übergangsstücks beschrieben. Die Verwendungsmöglichkeiten sind jedoch nicht darauf beschränkt. Vielmehr kann die erfindungsgemäße Dichtungsanordnung zur Verbesserung weiterer Verbindungen von Offshore-Bauwerken, insbesondere im Bereich der Offshore-Windenergieanlagen, verwendet werden. Dazu zählen die Verbindungen eines Übergangsstücks und eines oder mehrerer Pfahlstrukturen folgender Fundamenttypen: Jackets, Tripods, Tetrapods, Schwergewichtsgründungen, Tripiles, Bucket-Fundamente oder schwimmende Fundamente. Ferner kann die erfindungsgemäße Dichtungsanordnung auch bei Verbindungen im Bereich von Offshore-Hochspannungs-Gleichstrom-Übertragungssystemen verwendet werden.

Überdies kann die erfindungsgemäße Dichtungsanordnung auch bei der Errichtung der eigentlichen Windenergieanlage verwendet werden, um eine verbesserte Verbindung zwischen einzelnen rohrförmigen Turmsektionen bereitzustellen.

Gemäß dem bereits Vorbeschriebenen sowie dem weiter unten Nachbeschriebenen wird die eingangs gestellte Aufgabe auch durch ein Verfahren zur Herstellung einer erfindungsgemäßen Dichtungsanordnung für eine Verbindung zweier insbesondere als Monopile und Übergangsstück ausgebildeter Verbindungselemente eines Offshore-Bauwerks, vorzugsweise einer Offshore-Windenergieanlage, insbesondere eines Unterbaus derselben, gelöst, bei der eine Vergussmasse auf eine Verbindungsfläche eines Verbindungselementes gegossen wird und zur Ausbildung wenigstens einer Dichtungseinheit aushärtet.

Durch die Verwendung dieses Ansatzes wird ein optimaler Formschluss der Dichtungseinheit mit dem Verbindungselement erreicht, wodurch Punktbelastungen in einer Verbindungsposition vermieden werden, was die Lebensdauer der Dichtungsanordnung erhöht. Dabei ist mit "Gießen" insbesondere gemeint, dass die Vergussmasse zumindest im Wesentlichen mittels Schwerkraft auf die Verbindungsfläche fließt bzw. aus einer Öffnung herausläuft.

Insbesondere kann durch ein derartiges Gießverfahren eine Dichtungsanordnung mit geringem Zeitaufwand hergestellt werden. Die Vergussmasse wird dabei vorzugsweise in einer Rate von 15 kg/min bis 30 kg/min, bevorzugt 18 kg/min bis 22 kg/min, aufgebracht bzw. gegossen, wodurch eine Dichtungsanordnung schneller als mit einem Sprühverfahren hergestellt werden kann.

Beispielsweise ist vorgesehen, dass die Vergussmasse im Bereich der Verbindungsfläche eines Verbindungselements gegossen wird und zur Ausbildung wenigstens eines Abdichtungselements aushärtet. Der Bereich der Verbindungsfläche umfasst die Verbindungsfläche selbst und/oder eine oder mehrere bereits auf die Verbindungsfläche aufgetragene Schichten der Vergussmasse, die ausgehärtet oder nicht ausgehärtet vorliegen und auf welche die zum Abdichtungselement aushärtende Vergussmasse aufgetragen wird. Neben einem optimalen Formschluss wird dabei eine optimale Abdichtung zwischen Abdichtungselement und dem Bereich der Verbindungsfläche erreicht, wodurch die Kapselung durch das Abdichtungselement in einer Verbindungsposition unterstützt wird.

Die Materialeigenschaften der einen oder mehrere Ausgangsmaterialien umfassenden Vergussmasse können während der Herstellung der zumindest einen Dichtungseinheit durch Zugabe zumindest eines weiteren Ausgangsmaterials und/oder durch Variation des Mengenverhältnisses der Ausgangsmaterialien modifiziert werden. Dadurch können effizient je nach Einsatzort gewünschte Schichtgeometrien mit optimierten Eigenschaften hergestellt und somit beispielsweise die Belastbarkeit der Dichtungsanordnung verbessert werden.

Beispielhaft werden die Materialeigenschaften der Vergussmasse "on line", also während des laufenden Gießvorgangs, modifiziert, wodurch die Verfahrensdauer verringert wird. Ferner können die unterschiedliche Materialeigenschaften aufweisenden Fraktionen der Vergussmasse optimal stoffschlüssig miteinander verbunden werden, wodurch die Dichtungsanordnung robuster wird und eine bessere Verbindung hergestellt werden kann.

Die Vergussmasse kann unter Verwendung einer Gießvorrichtung mit zumindest einer formgebenden Gießöffnung gegossen werden. Die Gießöffnung kann insbesondere schlitzförmig sein. Dadurch kann die Vergussmasse präziser aufgebracht und somit die gewünschte Geometrie der Dichtungsanordnung genauestens erreicht werden. Insbesondere bedeutet "Gießen" in diesem Sinne, dass die Vergussmasse im Wesentlichen mittels Schwerkraft aus der Gießöffnung herausläuft.

Ferner kann die Vergussmasse in zumindest zwei räumlich getrennten Fraktionen auf die Verbindungsfläche aufgebracht werden. Insbesondere kann die Gießvorrichtung eine Mehrzahl von Gießöffnungen aufweisen, welche die Vergussmasse gleichzeitig in räumlich getrennten Fraktionen aufbringt. Dies verringert den Zeitaufwand für die Durchführung des Verfahrens und macht das Verfahren effizienter, was die Kosten für eine Dichtungsanordnung senkt.

Beispielhaft ist vorgesehen, dass die Vergussmasse zumindest zwei Ausgangsmaterialien umfasst, die vor dem Gießen in einer Vorkammer der Gießvorrichtung miteinander vermengt werden. Dadurch wird ein besonders hoher Grad an Homogenität der Vergussmasse erreicht, wobei die gewünschten Materialeigenschaften optimal eingestellt werden können.

Insbesondere können dabei die zumindest zwei Ausgangsmaterialien in der Vorkammer der Gießvorrichtung miteinander reagieren. Eine Reaktion tritt beispielsweise bei der Verwendung von Polyurethan als Vergussmasse auf, wobei Polyol und Isocyanat ggf. mit einem Vernetzer in flüssiger Phase miteinander vermengt werden und nach einer gewissen Zeit zu Polyurethan aushärten. Durch Zugabe eines Katalysators und/oder Inhibitors kann die Aushärtungsgeschwindigkeit beeinflusst werden. Beispielhaft werden die vorgenannten Komponenten in einer Vorkammer der Gießvorrichtung in einem für das Auftragen optimalen Verhältnis vermengt und anschließend als Vergussmasse aufgebracht, wodurch das Verfahren besonders prozesssicher wird.

Beispielsweise ist ferner vorgesehen, dass die Vergussmasse zumindest ein thermoplastisches Ausgangsmaterial umfasst, das in einer Vorkammer der Gießvorrichtung zum Erreichen eines gießfähigen Zustands erwärmt wird. Dadurch kann die Temperatur der zumindest ein thermoplastisches Ausgangsmaterial umfassenden Vergussmasse direkt vor dem Aufbringen gesteuert und insbesondere zur optimalen Aufbringung angepasst werden.

Das Verbindungselement kann um seine Längsmittelachse rotierbar gelagert werden und die Vergussmasse auf eine Verbindungsfläche des rotierenden Verbindungselements gegossen werden. Insbesondere ist dabei die Längsmittelachse gegenüber einer Horizontalen angewinkelt. Dies ist der Fall, wenn die Vergussmasse auf die Verbindungsfläche in einem konisch verlaufenden Abschnitt des Verbindungselements gegossen wird. Dabei entspricht der Winkel zwischen der Längsmittelachse und der Horizontalen in etwa dem halben Kegel-Öffnungswinkel des konisch verlaufenden Abschnitts des Verbindungselements, so dass der lotrecht unter der Längsmittelachse liegende Bereich des konisch verlaufenden Abschnitts des Verbindungselements zur Aufbringung der Vergussmasse in einer Richtung eben ausgerichtet ist.

Beispielhaft wird das Aufbringen der Vergussmasse auf die Verbindungsfläche des rotierenden Verbindungselements zumindest solange fortgeführt, bis die Vergussmasse zumindest einmal vollumfänglich auf der Verbindungsfläche aufgebracht ist. Somit kann die Vergussmasse in kurzer Zeit mit auf einem großen Abschnitt der Verbindungsfläche aufgebracht werden. Bei Schichtdicken von 3 cm kann ein Aufbringen der Vergussmasse bereits durch maximal zwei Umdrehungen des Verbindungselements gegenüber einer entsprechenden Gießöffnung abgeschlossen werden, wodurch eine Dichtungsanordnung insbesondere schneller hergestellt werden kann als mit einem Sprühverfahren.

Ferner kann die Rotation des Verbindungselements nach dem Aufbringen der Vergussmasse fortgeführt werden bis die Vergussmasse ausreichend ausgehärtet ist. Die Vergussmasse ist ausreichend ausgehärtet, wenn sie nicht mehr fließt. Dadurch kann die Vergussmasse besonders gleichmäßig und symmetrisch aufgetragen werden, was bei der fertigen Dichtungsanordnung zu einer gewünschten gleichmäßigen Belastung führt.

In einer weiteren beispielhaften Ausführungsform ist vorgesehen, dass die Gießöffnung und/oder das rotierende Verbindungselement während des Gießens relativ zueinander entlang einer Richtung senkrecht zur Umfangsrichtung bewegt werden, sodass die Vergussmasse auf einer größeren Fläche des Verbindungselements aufgebracht wird. Der Abstand der Gießöffnung von der Verbindungsfläche ist dabei während des Aufbringens einer Schicht insbesondere gleichbleibend. Dabei vollzieht die Gießöffnung relativ zur Verbindungsfläche eine spiralförmige Bewegung, wodurch eine besonders gleichmäßige, großflächige und schnelle Aufbringung der Vergussmasse erreicht wird.

Alternativ kann vorgesehen sein, dass das Verbindungselement um eine insbesondere zu einer Horizontalen angewinkelte Längsmittelachse des Verbindungselements rotierbar gelagert wird, Vergussmasse auf eine Verbindungsfläche des Verbindungselements aufgebracht wird, das Verbindungselement zumindest einmal in eine Position gedreht wird, die einer Rotation um eine drittel Umdrehung oder um weniger als eine drittel Umdrehung entspricht, und erneut Vergussmasse auf die Verbindungsfläche des Verbindungselements aufgebracht wird.

In diesem Zusammenhang ist es auch möglich, eine insbesondere zusätzliche Bewegung der Gießvorrichtung während des Aufbringens der Vergussmasse in Umfangsrichtung des Verbindungselements vorzusehen. Dabei sollte der Bewegungsradius auf einen bezüglich der Schwerkraft untenliegenden Bereich des Verbindungselements beschränkt sein, um den Gießvorgang ausführen zu können. Ferner kann vorgesehen sein, dass die Gießöffnung relativ zur Verbindungsfläche eine zickzack- oder schlangenlinienförmige Bewegung vollzieht, wodurch ebenfalls eine besonders gleichmäßige großflächige und schnelle Aufbringung der Vergussmasse erreicht wird.

Beispielhaft ist vorgesehen, dass die Vergussmasse in einer Schichtdicke von 5 mm bis 75 mm, bevorzugt 20 mm bis 50 mm, besonders bevorzugt 25 mm bis 30 mm, aufgebracht wird. Bei mehrschichtigem Auftragen können einzelne Schichten mit kleineren Schichtdicken aufgebracht werden. Bei derartigen Schichtdicken kann das aufgebrachte Material sich nicht ungünstig verlagern bzw. zerfließen, so dass das Verfahren prozesssicherer ist.

Es kann eine Sensoranordnung zum Aufnehmen mechanischer Kräfte installiert werden, insbesondere in die Vergussmasse eingebettet werden. Dadurch können die im Betrieb vorherrschenden Belastungen aufgezeichnet und die Funktionalität der Dichtungsanordnung überwacht werden.

Ferner kann vorgesehen sein, dass die Verbindungsfläche des Verbindungselements vor dem Aufbringen der Vergussmasse mittels eines Haftvermittlers (Primers) vorkonditioniert wird. Die Vorkonditionierung umfasst dabei das Aufbringen des Haftvermittlers, insbesondere durch die Gießvorrichtung, und ein Trocknen und/oder zum Trocken belassen des Haftvermittlers. Dies führt zu einer erhöhten Haftfestigkeit zwischen der Vergussmasse und dem Verbindungselement, so dass die Vergussmasse sich nicht nachteilig verlagern bzw. zerfließen kann.

Dem Aufbringen der Vergussmasse und insbesondere der Vorkonditionierung mittels eines Haftvermittlers kann eine Vorbehandlung der Verbindungsfläche des Verbindungselements vorgelagert sein. Diese Vorbehandlung umfasst beispielsweise einen oder mehrere folgender Schritte:
- Reinigen, insbesondere Entfetten der Verbindungsfläche,
- Sandstrahlen der Verbindungsfläche sowie
- anschließendes Reinigen der Verbindungsfläche, insbesondere Entfernen von Staub.

Dadurch werden Ablagerungen wie Schmutz oder Rost entfernt und Unebenheiten geglättet, wodurch ein besonders gleichmäßiges Auftragen und Haften der Vergussmasse ermöglicht wird.

Ein Verfahren zur Herstellung einer Verbindung zweier Verbindungselemente eines Offshore-Bauwerks, insbesondere einer Offshore-Windenergieanlage, vorzugsweise eines zwei als Monopile und Übergangsstück ausgebildete Verbindungselemente umfassenden Unterbaus derselben, kann folgende Schritte umfassen:
A Bereitstellen eines eine Verbindungsfläche aufweisenden Verbindungselements,
B Herstellen einer Dichtungsanordnung an der Verbindungsfläche des Verbindungselements nach Anspruch 14 ,
C klemmendes Ineinanderstecken des einen Verbindungselements und des anderen Verbindungselements.

Weitere Vorteile und Einzelheiten sind der nachfolgenden Figurenbeschreibung zu entnehmen.

In den schematisch dargestellten Figuren zeigen:
- Fig. 1: eine Schnittdarstellung eines erfindungsgemäßen Gegenstands in einer Verbindungsposition mit zwei vergrößerten Detailansichten,
- Fig. 2: eine Schnittdarstellung eines weiteren erfindungsgemäßen Gegenstands mit zwei vergrößerten Detailansichten,
- Fig. 3: eine Schnittdarstellung der Dichtungseinheit aus Fig. 2 mit zwei vergrößerten Detailansichten,
- Fig. 4: eine Schnittdarstellung eines weiteren erfindungsgemäßen Gegenstands mit zwei vergrößerten Detailansichten,
- Fig. 5: eine Schnittdarstellung der Dichtungseinheit aus Fig. 4 mit zwei vergrößerten Detailansichten,
- Fig. 6: eine Schnittdarstellung eines weiteren erfindungsgemäßen Gegenstands mit zwei vergrößerten Detailansichten,
- Fig. 7: eine Schnittdarstellung der Dichtungseinheiten aus Fig. 6 mit zwei vergrößerten Detailansichten,
- Fig. 8: einen weiteren erfindungsgemäßen Gegenstand in einer transparenten Ansicht,

- Fig. 9: eine nicht-transparente Schnittdarstellung des Gegenstands aus Fig. 8,
- Fig. 10: einen Ablaufplan eines erfindungsgemäßen Verfahrens.

Gleich oder ähnlich wirkende Teile sind - sofern dienlich - mit identischen Bezugsziffern versehen.

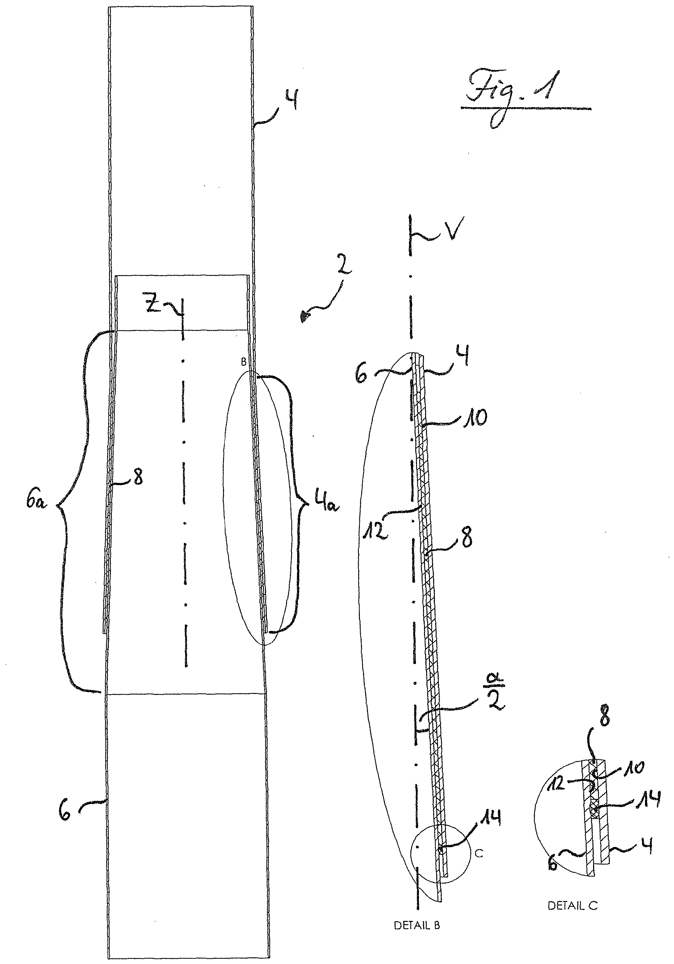

Fig. 1 zeigt eine erfindungsgemäße Dichtungsanordnung 2 in einer Verbindungsposition. Dabei sind ein oberes Verbindungselement 4 und ein unteres Verbindungselement 6 ineinandergesteckt, wobei sich der konisch verlaufende Abschnitt 4a des oberen Verbindungselementes 4 und der konisch verlaufende Abschnitt 6a des unteren Verbindungselements 6 überlappen. Wie besonders gut in der Vergrößerungsansicht B (Detail B) zu sehen ist, sind die Verbindungselemente 4, 6 ineinandergesteckt, wobei zwischen ihnen eine Dichtungseinheit 8 eingeklemmt ist.

Das obere Verbindungselement 4 umschließt in einem unteren Bereich einen oberen Bereich des unteren Verbindungselements 6 und stellt somit das äußere Verbindungselement dar, während das untere Verbindungselement 6 als das innere Verbindungselement anzusehen ist.

Die Dichtungseinheit 8 ist zwischen einer inneren Verbindungsfläche 10 des oberen Verbindungselements 4 und einer äußeren Verbindungsfläche 12 des unteren Verbindungselements 6 angeordnet, beabstandet die Verbindungselemente 4, 6 voneinander und überträgt Kräfte zwischen den Verbindungselementen 4, 6, beispielsweise die Gewichtskraft des oberen Verbindungselements 4 auf das untere Verbindungselement 6. In diesem Sinne trägt die Dichtungseinheit 8 das obere Verbindungselement 4.

Die Dichtungseinheit 8 ist ferner in der Form eines hohlen Kegelstumpfs ausgebildet, der an die Geometrie der Verbindungselemente 4, 6 angepasst ist. Dazu sind die konisch verlaufenden Abschnitte 4a, 6a der Verbindungselemente 4, 6 sowie die Dichtungseinheit 8 durch ein und denselben Kegel-Öffnungswinkel α beschreibbar, der durch die Neigung des Kegelmantels gegenüber einer Vertikalen V definiert ist (s. Vergrößerungsansicht B (Detail B)). In den hier gezeigten Beispielen, beträgt der Kegel-Öffnungswinkel α 4°. Der in der Vergrößerungsansicht B gut sichtbare Neigungswinkel des Kegelmantels gegenüber der Vertikalen entspricht dem halben Kegel-Öffnungswinkel α und beträgt 2°. Ferner definiert die Rotationssymmetrie des hohlkegelförmigen Formkörpers eine Zentralachse Z für die Dichtungseinheit 8.

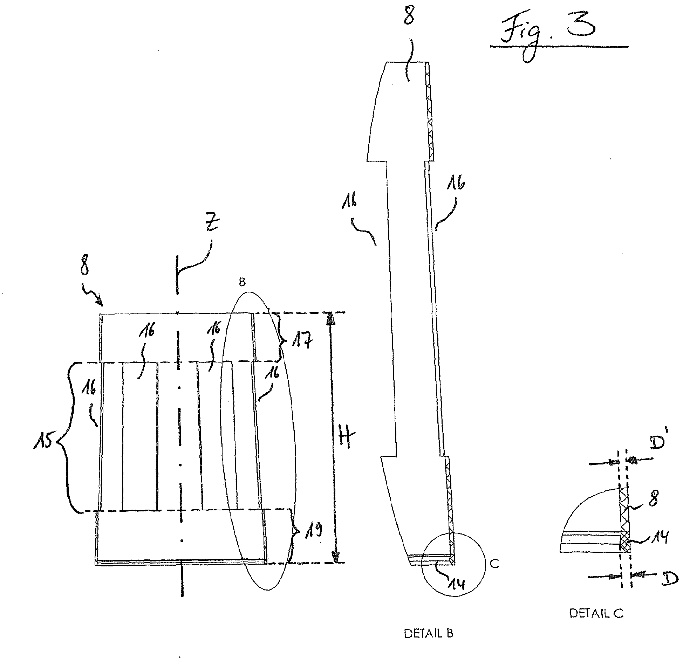

Die Dichtungseinheit 8 weist ein elastisches Abdichtungselement 14 auf, das sich in Umfangsrichtung vollumfänglich erstreckt. Die Dicke D des Abdichtungselements 14 ist gegenüber der Dicke D' eines angrenzenden Dichtungseinheitsbereichs vergrö-ßert, wie in Fig. 3, Vergrößerungsansicht C (Detail C), zu sehen ist. Das gegenüber der weiteren Dichtungseinheit 8 hervorstehende Abdichtungselement 14 übt eine Druckkraft auf eine gegenüberliegende Verbindungsfläche auf, welche in den hier gezeigten Beispielen die äußere Verbindungsfläche 12 des unteren Verbindungselements 6 ist. Im Falle einer Relativbewegung der Verbindungselemente 4, 6 zueinander bleibt die Baugruppe gekapselt, so dass kein schädliches Meerwasser und/oder Feuchtigkeit eintreten kann.

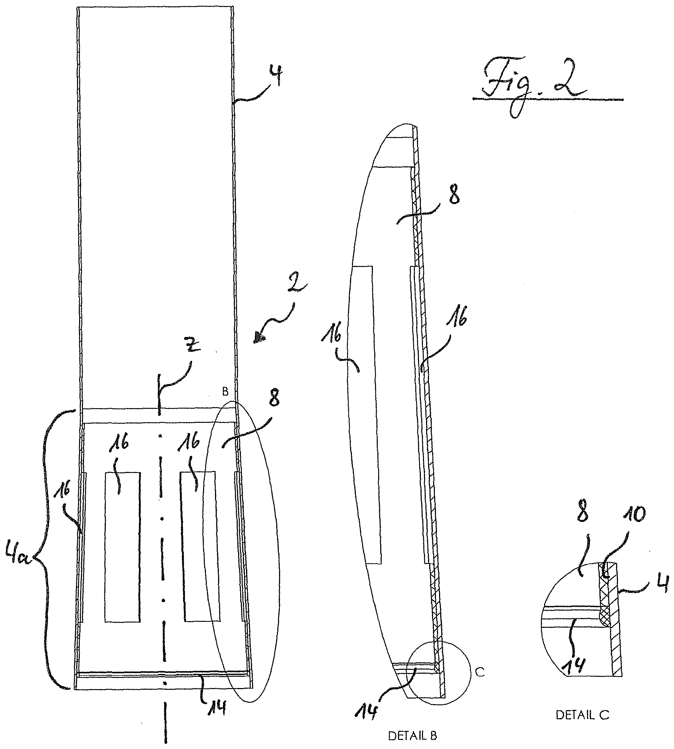

Die Fig. 2 zeigt eine Dichtungsanordnung 2, wobei die Dichtungseinheit 8 von dem oberen Verbindungselement 4 im konisch verlaufenden Abschnitt 4a an der inneren Verbindungsfläche 10 festgelegt ist. Zur Verbindungsherstellung wird das die Dichtungseinheit 8 umfassende obere Verbindungselement 4 über ein unteres Verbindungselement 6 gestülpt bzw. auf das untere Verbindungselement 6 herabgelassen, bis eine klemmende Verbindung entsteht. Es ist ersichtlich, dass die Dichtungseinheit 8 vor der Verbindungsherstellung alternativ an dem unteren Verbindungselement 6 im konisch verlaufenden Abschnitt 6a an der äußeren Verbindungsfläche 12 festgelegt sein kann.

Fig. 3 zeigt die Dichtungseinheit 8 aus der Fig. 2. Die Dichtungseinheit 8 ist in der Form eines hohlen Kegelstumpfs ausgebildet und weist dabei zwischen einem oberen umlaufend geschlossenen Höhenabschnitt 17 und einem unteren umlaufend geschlossenen Höhenabschnitt 19 in einem Höhenabschnitt 15 in Umfangsrichtung mehrere Ausnehmungen 16 auf, wodurch Material eingespart wird. Ferner ist die Höhe H der Dichtungseinheit 8 als parallel zur Zentralachse Z gemessene äußere Abmessung der Dichtungseinheit 8 dargestellt.

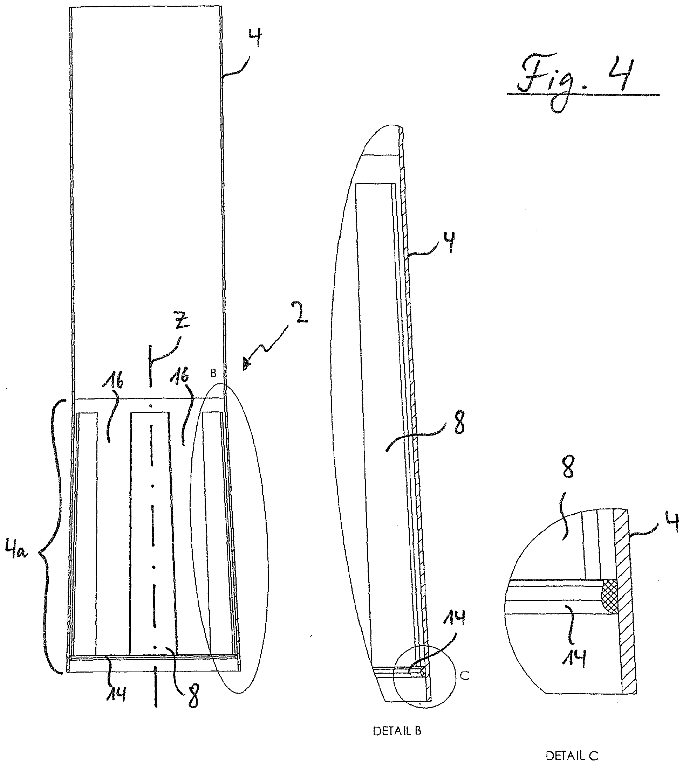

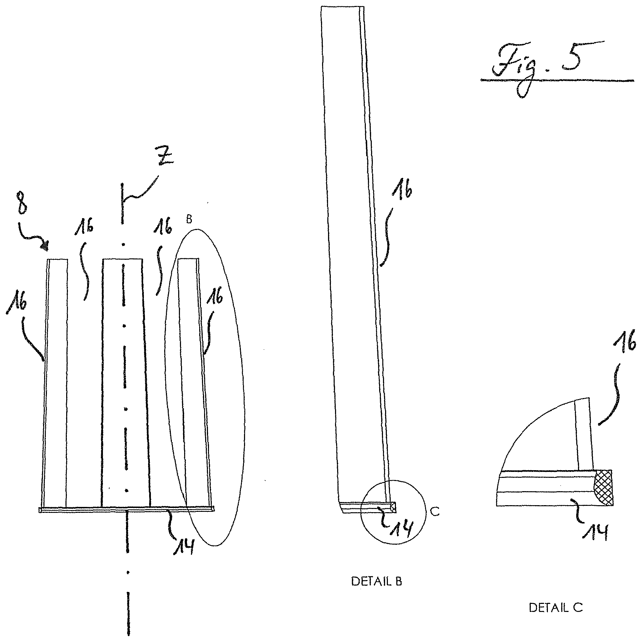

Die Fig. 4 und zeigt eine weitere Ausgestaltungsform der erfindungsgemäßen Dichtungsanordnung 2 mit einer Dichtungseinheit 8. Fig. 5 zeigt die Dichtungseinheit 8 aus Fig. 4, welche über den gesamten Höhenabschnitt 15 oberhalb des Abdichtungselements 14 in Umfangsrichtung mehrere Ausnehmungen 16 aufweist.

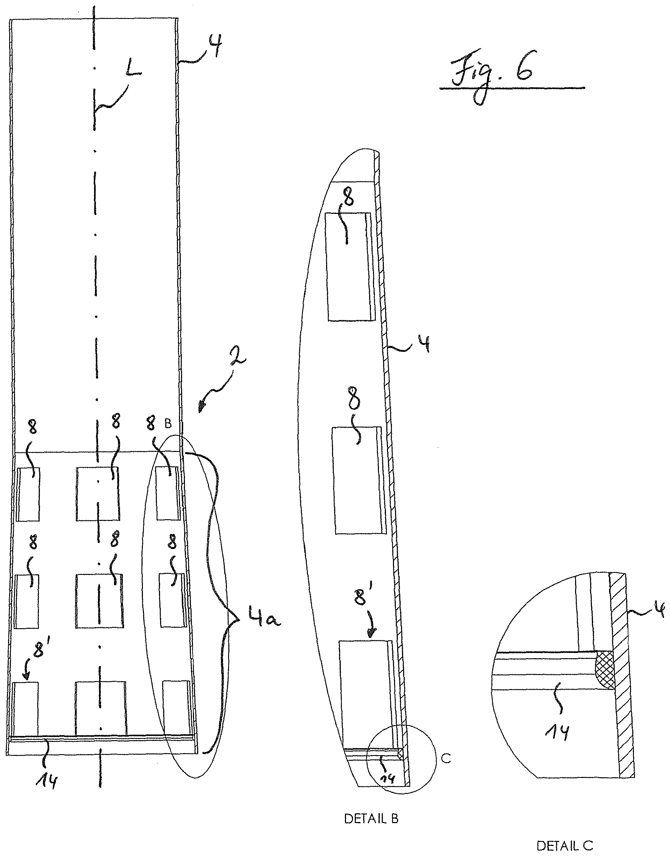

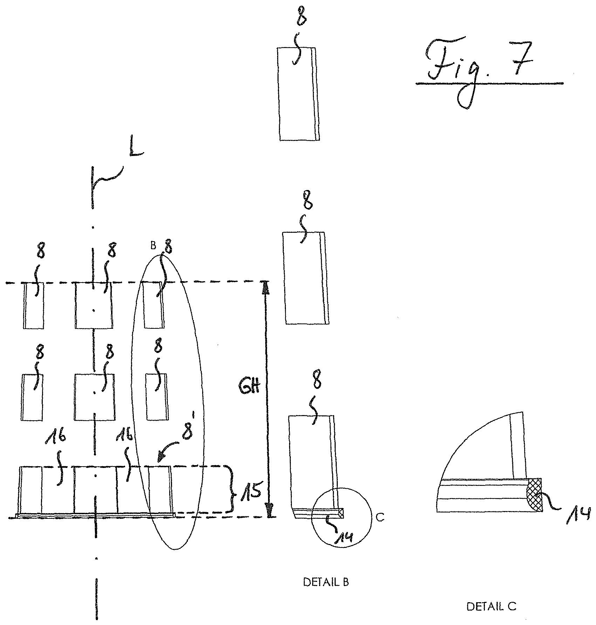

Fig. 6 zeigt ferner eine weitere Ausgestaltungsform der erfindungsgemäßen Dichtungsanordnung 2 mit einer Vielzahl von voneinander beabstandeten Dichtungseinheiten 8, 8`, die eine Gruppe von Dichtungseinheiten bilden. Fig. 7 zeigt die Dichtungseinheiten 8, 8' aus Fig. 6. Die oberen Dichtungseinheiten 8 bilden dabei Segmente eines hohlen Kegelstumpfs aus, die in Umfangsrichtung bezüglich der Längsmittelachse L des oberen Verbindungselements 4 sowie einer Richtung parallel zur Längsmittelachse L jeweils voneinander beabstandet sind. Die untere Dichtungseinheit 8' ist von den weiteren Dichtungseinheiten 8 in einer Richtung parallel zur Längsmittelachse L beabstandet und umfasst das sich vollumfänglich erstreckende Abdichtungselement 14. Ferner weist die untere Dichtungseinheit 8' in einem darüber liegenden Höhenabschnitt 15 mehrere Ausnehmungen 16 in Umfangsrichtung auf. Darüber hinaus ist die Gesamthöhe GH der Gruppe von Dichtungseinheiten gezeigt.

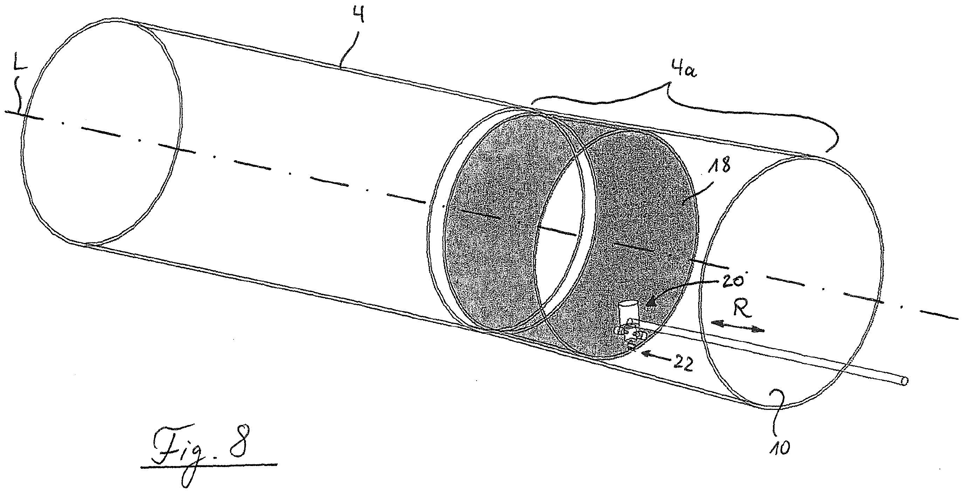

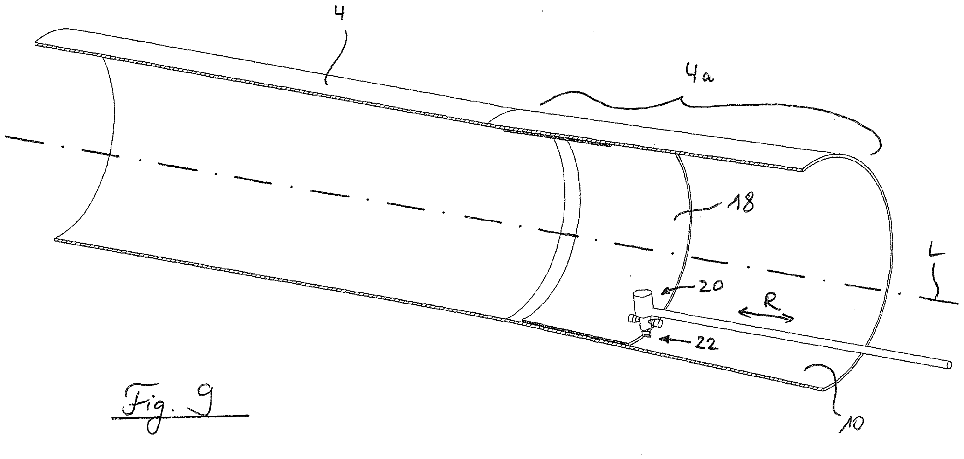

Die Fig. 8 und 9 zeigen einen Schritt eines erfindungsgemäßen Verfahrens. Dabei wird im konisch verlaufenden Abschnitt 4a des oberen Verbindungselements 4 eine Vergussmasse 18 mittels einer Gießvorrichtung 20 auf die innere Verbindungsfläche 10 gegossen. Das obere Verbindungselement 4 rotiert hierbei um seine Längsmittelachse L. Die Gießvorrichtung 20 weist eine schlitzförmige Gießöffnung 22 auf, die sich beim Aufbringen der Vergussmasse 18 lotrecht unterhalb der Längsmittelachse L und oberhalb der Verbindungsfläche 10 befindet. Die Gießvorrichtung 20 wird beim Gießen in einer Richtung R senkrecht zur Umfangsrichtung bewegt. Durch diese Bewegung und in Verbindung mit der Rotation des Verbindungselements 4 vollzieht die Gießöffnung 22 relativ zur Verbindungsfläche 10 eine spiralförmige Bewegung. So wird eine besonders gleichmäßige, großflächige und schnelle Aufbringung der Vergussmasse 18 erreicht.

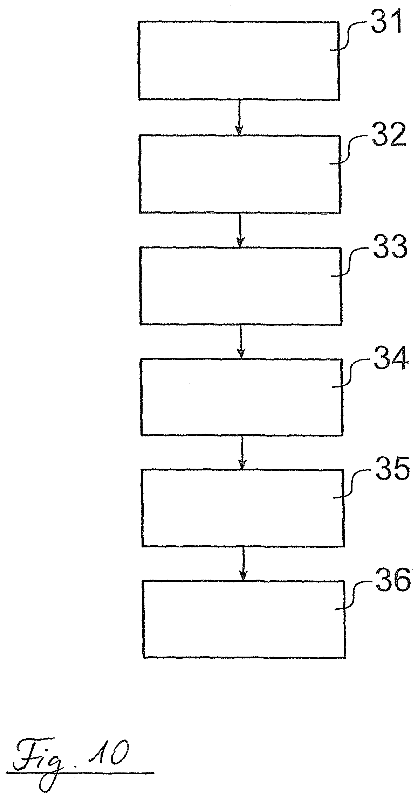

Fig. 10 zeigt einen Ablaufplan eines erfindungsgemäßen Verfahrens, wobei in einem ersten Schritt 31 die Verbindungsfläche 10, 12 gereinigt, insbesondere entfettet, werden kann. In einem zweiten Schritt 32 kann die Verbindungsfläche 10, 12 sandgestrahlt werden. In einem dritten Schritt 33 wird die Verbindungsfläche 10, 12 beispielhaft erneut gereinigt und insbesondere von Staub befreit. In einem vierten Schritt 34 kann der Haftvermittler bzw. Primer auf die Verbindungsfläche 10, 12 aufgebracht werden. In einem fünften Schritt 35 wird der Haftvermittler bzw. Primer beispielsweise getrocknet und/oder zum Trocknen belassen. Und in einem sechsten Schritt 36 wird die Vergussmasse 18 aufgebracht.

## Patentansprüche

1. Dichtungsanordnung (2) für eine Verbindung zweier insbesondere als Monopile und Übergangsstück ausgebildeter Verbindungselemente (4, 6) eines Offshore-Bauwerks, vorzugsweise einer Offshore-Windenergieanlage, insbesondere eines Unterbaus derselben, bei der ein oberes Verbindungselement (4) und ein unteres Verbindungselement (6) zur stabilen Verbindungsherstellung zumindest eine Dichtungseinheit (8, 8') klemmend ineinander gesteckt sind, umfassend eines der Verbindungselemente (4, 6) und die an dem Verbindungselement (4, 6) festgelegte zumindest eine Dichtungseinheit (8, 8'), wobei die zumindest eine Dichtungseinheit (8, 8') derart an dem Verbindungselement (4, 6) festgelegt ist, dass die Dichtungseinheit (8, 8') in einer Verbindungsposition zwischen einer inneren Verbindungsfläche (10) des einen Verbindungselements (4, 6) und einer äußeren Verbindungsfläche (12) des anderen Verbindungselements (4, 6) angeordnet ist, **dadurch gekennzeichnet, dass** die zumindest eine Dichtungseinheit (8, 8') lasttragend ausgebildet ist, so dass diese die Verbindungselemente (4, 6) in der Verbindungsposition voneinander beabstandet und das obere Verbindungselement (4) trägt, wobei zumindest eine Dichtungseinheit (8, 8') wenigstens ein sich in Umfangsrichtung vollumfänglich ersteckendes, elastisches Abdichtungselement (14) aufweist, dessen Dicke (D) gegenüber der Dicke (D') eines angrenzenden Bereichs der Dichtungseinheit (8, 8') vergrößert ist.

2. Dichtungsanordnung (2) nach Anspruch 1, **dadurch gekennzeichnet, dass** die zumindest eine Dichtungseinheit (8, 8') eine Dicke von 5 mm bis 75 mm, bevorzugt 20 mm bis 50 mm, besonders bevorzugt 25 mm bis 30 mm, aufweist.

3. Dichtungsanordnung (2) nach Anspruch 1 oder 2, **dadurch gekennzeichnet, dass** die zumindest eine Dichtungseinheit (8, 8') mehrschichtig ausgebildet ist.

4. Dichtungsanordnung (2) nach einem der Ansprüche 1 bis 3, **dadurch gekennzeichnet, dass** das eine oder die mehreren Abdichtungselemente (14) eine höhere Elastizität aufweisen als die übrige Dichtungseinheit (8, 8').

5. Dichtungsanordnung (2) nach einem der Ansprüche 1 bis 4, **dadurch gekennzeichnet, dass** die zumindest eine Dichtungseinheit (8, 8') hydrolysestabil ausgebildet ist und ein oder mehrere Materialien aus der Gruppe Polypropylen, Polyethylen, Polyoxymethylen, Gummi, Nylon, Polyvinylchlorid, Polyurea, Polyurethan, umfasst.

6. Dichtungsanordnung (2) nach einem der Ansprüche 1 bis 5, **dadurch gekennzeichnet, dass** die zumindest eine Dichtungseinheit (8, 8') bis zu 50 % einen oder mehrere Füllstoffe umfasst, vorzugsweise in Form von CaC03, Wollastonit, Graphit und/oder Ruß.

7. Dichtungsanordnung (2) nach einem der Ansprüche 1 bis 6, **dadurch gekennzeichnet, dass** die zumindest eine Dichtungseinheit (8, 8') mittels eines Haftvermittlers an der Verbindungsfläche (10, 12) zumindest eines der Verbindungselemente (4, 6) haftet.

8. Dichtungsanordnung (2) nach einem der Ansprüche 1 bis 7, **dadurch gekennzeichnet, dass** das zumindest einen Abdichtungselement (14) eine Shore-Härte A zwischen 40 und 100 aufweist.

9. Dichtungsanordnung (2) nach einem der Ansprüche 1 bis 8, **dadurch gekennzeichnet, dass** die zumindest eine Dichtungseinheit (8, 8') einer Druckbelastung von 0,1 N/mm² bis 50 N/mm² standhaltend ausgebildet ist.

10. Dichtungsanordnung (2) nach einem der Ansprüche 1 bis 9, **dadurch gekennzeichnet, dass** die zumindest eine Dichtungseinheit (8, 8') aus mehreren aneinander angeordneten Dichtungssegmenten zusammengesetzt ist.

11. Dichtungsanordnung (2) nach einem der Ansprüche 1 bis 10, **dadurch gekennzeichnet, dass** die Dichtungsanordnung (2) zumindest zwei voneinander beabstandete Dichtungseinheiten (8, 8') umfasst.

12. Dichtungsanordnung (2) nach einem der Ansprüche 1 bis 11, **dadurch gekennzeichnet, dass** die zumindest eine Dichtungseinheit (8, 8') in zumindest einem Höhenabschnitt (15) in Umfangsrichtung zumindest eine Ausnehmung (16) aufweist.

13. Dichtungsanordnung (2) nach einem der Ansprüche 1 bis 12, **dadurch gekennzeichnet, dass** die Dichtungsanordnung (2) eine Sensoranordnung zum Aufnehmen der in der Dichtungsanordnung (2) auftretenden mechanischen Kräfte umfasst.

14. Verfahren zur Herstellung einer Dichtungsanordnung (2) nach einem der vorherigen Ansprüche für eine Verbindung zweier insbesondere als Monopile und Übergangsstück ausgebildeter Verbindungselemente (4,6) eines Offshore-Bauwerks, vorzugsweise einer Offshore-Windenergieanlage, insbesondere eines Unterbaus derselben, , **dadurch gekennzeichnet, dass** eine Vergussmasse (18) auf eine Verbindungsfläche (10,12) eines Verbindungselements (4,6) gegossen wird und zur Ausbildung wenigstens einer Dichtungseinheit (8,8') aushärtet.

## Claims

1. Seal arrangement (2) for a connection between two connecting elements (4, 6), in particular designed as a monopile and a transition piece, of an offshore structure, preferably an offshore wind turbine, in particular a substructure thereof, in which an upper connecting element (4) and a lower connecting element (6) are inserted into one another so as to clamp at least one sealing unit (8, 8') in order to produce a stable connection, comprising one of the connecting elements (4, 6) and the at least one seal unit (8, 8') attached to the connecting element (4, 6), the at least one seal unit (8, 8') being attached to the connecting element (4, 6) such that the seal unit (8, 8') is arranged in a connection position between an inner connecting surface (10) of the one connecting element (4, 6) and an outer connecting surface (12) of the other connecting element (4, 6),
**characterized in that** the at least one seal unit (8, 8') is designed to be load-bearing, such that said seal unit spaces the connecting elements (4, 6) apart from one another in the connection position and supports the upper connecting element (4), at least one seal unit (8, 8') having at least one elastic sealing element (14) which extends over the entire circumference thereof in the circumferential direction and the thickness (D) of which is greater than the thickness (D') of an adjoining region of the seal unit (8, 8').

2. Seal arrangement (2) according to claim 1, **characterized in that** the at least one seal unit (8, 8') has a thickness of 5 mm to 75 mm, preferably 20 mm to 50 mm, particularly preferably 25 mm to 30 mm.

3. Seal arrangement (2) according to either claim 1 or claim 2, **characterized in that** the at least one seal unit (8, 8') has a multi-layer design.

4. Seal arrangement (2) according to any of claims 1 to 3,
**characterized in that** the one or more sealing elements (14) have a greater elasticity than the rest of the seal unit (8, 8').

5. Seal arrangement (2) according to any of claims 1 to 4,
**characterized in that** the at least one seal unit (8, 8') is designed to be hydrolysis-stable and comprises one or more materials from the group polypropylene, polyethylene, polyoxymethylene, rubber, nylon, polyvinyl chloride, polyurea and polyurethane.

6. Seal arrangement (2) according to any of claims 1 to 5,
**characterized in that** the at least one seal unit (8, 8') comprises up to 50% of one or more fillers, preferably in the form of CaC03, wollastonite, graphite and/or carbon black.

7. Seal arrangement (2) according to any of claims 1 to 6,
**characterized in that** the at least one seal unit (8, 8') adheres to the connecting surface (10, 12) of at least one of the connecting elements (4, 6) by means of an adhesion promoter.

8. Seal arrangement (2) according to any of claims 1 to 7,
**characterized in that** the at least one sealing element (14) has a Shore A hardness between 40 and 100.

9. Seal arrangement (2) according to any of claims 1 to 8,
**characterized in that** the at least one seal unit (8, 8') is designed to withstand a compressive load of 0.1 N/mm² to 50 N/mm².

10. Seal arrangement (2) according to any of claims 1 to 9,
**characterized in that** the at least one seal unit (8, 8') is composed of a plurality of seal segments arranged on one another.

11. Seal arrangement (2) according to any of claims 1 to 10,
**characterized in that** the seal arrangement (2) comprises at least two mutually spaced seal units (8, 8').

12. Seal arrangement (2) according to any of claims 1 to 11,
**characterized in that** the at least one seal unit (8, 8') has at least one recess (16) in the circumferential direction in at least one height portion (15).

13. Seal arrangement (2) according to any of claims 1 to 12,
**characterized in that** the seal arrangement (2) comprises a sensor arrangement for detecting the mechanical forces occurring in the seal arrangement (2).

14. Method for producing a seal arrangement (2) according to any of the preceding claims for a connection between two connecting elements (4, 6), in particular designed as a monopile and a transition piece, of an offshore structure, preferably an offshore wind turbine, in particular a substructure thereof,
**characterized in that** a grouting compound (18) is poured onto a connecting surface (10, 12) of a connecting element (4, 6) and hardens to form at least one seal unit (8, 8').

## Revendications

1. Agencement d'étanchéité (2) pour la liaison de deux éléments de liaison (4, 6), en particulier formés comme un monopieu et une pièce de transition, d'une construction en mer, de préférence d'une éolienne en mer, en particulier d'une sous-structure de celle-ci, dans lequel un élément de liaison supérieur (4) et un élément de liaison inférieur (6) sont insérés l'un dans l'autre par serrage pour l'établissement de liaison stable d'au moins une unité d'étanchéité (8, 8'), comprenant un des éléments de liaison (4, 6) et l'au moins une unité d'étanchéité (8, 8') fixée à l'élément de liaison (4, 6), l'au moins une unité d'étanchéité (8, 8') étant fixée à l'élément de liaison (4, 6) de telle façon que l'unité d'étanchéité (8, 8') est disposée dans une position de liaison entre une surface de liaison interne (10) de l'un des éléments de liaison (4, 6) et une surface de liaison externe (12) de l'autre élément de liaison (4, 6), **caractérisé en ce que** l'au moins une unité d'étanchéité (8, 8') est conçue de manière à porter une charge, de sorte que, dans la position de liaison, elle espace les éléments de liaison (4, 6) l'un de l'autre et porte l'élément de liaison supérieur (4), au moins une unité d'étanchéité (8, 8') présentant au moins un élément d'étanchéité (14) élastique s'étendant entièrement dans la direction circonférentielle, dont l'épaisseur (D) est agrandie par rapport à l'épaisseur (D') d'une zone adjacente de l'unité d'étanchéité (8, 8').

2. Agencement d'étanchéité (2) selon la revendication 1, **caractérisé en ce que** l'au moins une unité d'étanchéité (8, 8') présente une épaisseur de 5 mm à 75 mm, de préférence de 20 mm à 50 mm, encore plus préférablement de 25 mm à 30 mm.

3. Agencement d'étanchéité (2) selon la revendication 1 ou 2,
**caractérisé en ce que** l'au moins une unité d'étanchéité (8, 8') est formée en plusieurs couches.

4. Agencement d'étanchéité (2) selon l'une des revendications 1 à 3, **caractérisé en ce que** le ou les éléments d'étanchéité (14) présentent une élasticité supérieure à celle du reste de l'unité d'étanchéité (8, 8').

5. Agencement d'étanchéité (2) selon l'une des revendications 1 à 4,
**caractérisé en ce que** l'au moins une unité d'étanchéité (8, 8') est formée stable vis-à-vis de l'hydrolyse et comprend un ou plusieurs matériaux du groupe constitué par le polypropylène, polyéthylène, polyoxyméthylène, caoutchouc, nylon, polychlorure de vinyle, polyurée, polyuréthane.

6. Agencement d'étanchéité (2) selon l'une des revendications 1 à 5,
**caractérisé en ce que** l'au moins une unité d'étanchéité (8, 8') comprend jusqu'à 50 % d'une ou de plusieurs matières de remplissage, de préférence sous la forme de CaCO3, wollastonite, graphite et/ou suie.

7. Agencement d'étanchéité (2) selon l'une des revendications 1 à 6,
**caractérisé en ce que** l'au moins une unité d'étanchéité (8, 8') adhère, au moyen d'un promoteur d'adhérence, à la surface de liaison (10, 12) d'au moins l'un des éléments de liaison (4, 6).

8. Agencement d'étanchéité (2) selon l'une des revendications 1 à 7,
**caractérisé en ce que** l'au moins un élément d'étanchéité (14) présente une dureté Shore A située entre 40 et 100.

9. Agencement d'étanchéité (2) selon l'une des revendications 1 à 8,
**caractérisé en ce que** l'au moins une unité d'étanchéité (8, 8') est formée de manière à résister à une charge de pression de 0,1 N/mm² à 50 N/mm².

10. Agencement d'étanchéité (2) selon l'une des revendications 1 à 9,
**caractérisé en ce que** l'au moins une unité d'étanchéité (8, 8') est composée de plusieurs segments d'étanchéité disposés les uns contre les autres.

11. Agencement d'étanchéité (2) selon l'une des revendications 1 à 10,
**caractérisé en ce que** l'agencement d'étanchéité (2) comprend au moins deux unités d'étanchéité (8, 8') espacées l'une de l'autre.

12. Agencement d'étanchéité (2) selon l'une des revendications 1 à 11,
**caractérisé en ce que** l'au moins une unité d'étanchéité (8, 8') présente au moins un évidement (16) dans au moins une section en hauteur (15) dans la direction circonférentielle.

13. Agencement d'étanchéité (2) selon l'une des revendications 1 à 12,
**caractérisé en ce que** l'agencement d'étanchéité (2) comprend un agencement de capteur destiné à absorber les forces mécaniques se produisant dans l'agencement d'étanchéité (2).

14. Procédé de fabrication d'un agencement d'étanchéité (2) selon l'une des revendications précédentes pour la liaison de deux éléments de liaison (4, 6), en particulier formés comme un monopieu et une pièce de transition, d'une construction en mer, de préférence d'une éolienne en mer, en particulier d'une sous-structure de celle-ci, **caractérisé en ce qu'**une masse de coulée (18) est coulée sur une surface de liaison (10, 12) d'un élément de liaison (4, 6) et durcie pour la formation d'au moins une unité d'étanchéité (8, 8').
